# EUROPEAN PATENT APPLICATION

(11) **EP 4 718 416 A1**
(43) Date of publication of application: **01.04.2026**
(21) Application number: 24810823.5
(22) Date of filing: 23.04.2024
(51) Int. Cl.: G08B 21/22, G06Q 50/10

(54) **DETERMINATION SYSTEM, INTEGRATION SYSTEM, DETERMINATION METHOD, AND PROGRAM**

(30) Priority: 22.05.2023 JP 2023084032
(71) Applicant: Panasonic Intellectual Property Management Co., Ltd., Kadoma-shi, Osaka 571-0057 (JP)
(72) Inventor: KOGA, Tatsuo, Kadoma-shi, Osaka 571-0057 (JP); ITOH, Kazuo, Kadoma-shi, Osaka 571-0057 (JP); URA, Kazuto, Kadoma-shi, Osaka 571-0057 (JP)
(74) Representative: Appelt, Christian W.
(86) International application number: PCT/JP2024/015935
(87) International publication number: WO 2024/241815

(57) **Abstract**

The problem to be overcome by the present disclosure is to determine whether any abnormality has occurred in the number of persons present in a space. A determination system (1) includes an acquirer (101), an estimator (102), a detector (103), and a determiner (104). The acquirer (101) acquires schedule information representing multiple time slots, in each of which any number of persons are present in, or absent from, a space. The estimator (102) estimates, by reference to the schedule information, how many persons are supposed to be present in the space to obtain an estimated number of persons. The detector (103) detects, based on a result of detection provided by a sensor (20) installed in the space to detect any human beings, how many persons are present in the space to obtain a detected number of persons. The determiner (104) compares the estimated number of persons with the detected number of persons to determine, based on a result of comparison, whether a current condition in the space is an abnormal condition where abnormality has occurred in the space. When the result of comparison indicates that the estimated number of persons disagrees with the detected number of persons, the determiner (104) determines the current condition in the space to be the abnormal condition.

## Description

### Technical Field

The present disclosure generally relates to a determination system, an integrated system, a determination method, and a program, and more particularly relates to a determination system, an integrated system, a determination method, and a program, all of which are used to determine whether any abnormality has occurred in a given space.

### Background Art

Patent Literature 1 discloses an information processing device having the ability to allow the user to be aware of the occurrence of an event more easily.

The information processing device of Patent Literature 1 counts the number of persons in each area to obtain an actually measured value of the number of persons. The information processing device acquires environmental data representing environmental information in each area. The information processing device uses a predetermined model by reference to the environmental information about each area to calculate an estimated value of the number of persons in that area. Then, the information processing device generates output data based on a differential value between the actually measured value and the estimated value in each area.

The information processing device of Patent Literature 1 allows the user to intuitively recognize the location of either an area where the number of persons gathered is greater than an expected number or a unit area where the number of persons gathered is less than the expected number. However, the information processing device of Patent Literature 1 cannot manage the number of persons who are supposed to be present in that area (or space) or determine whether any abnormality has occurred in that space.

### Citation List

### Patent Literature

Patent Literature 1: JP 2016-122373 A

### Summary of Invention

In view of the foregoing background, it is therefore an object of the present disclosure to provide a determination system, an integrated system, a determination method, and a program, all of which may be used to determine whether any abnormality has occurred in the number of persons present in a given space.

A determination system according to an aspect of the present disclosure includes an acquirer, an estimator, a detector, and a determiner. The acquirer acquires schedule information representing multiple time slots, in each of which any number of persons are present in, or absent from, a space. The estimator estimates, by reference to the schedule information, how many persons are supposed to be present in the space to obtain an estimated number of persons. The detector detects, based on a result of detection provided by a sensor installed in the space to detect any human beings, how many persons are present in the space to obtain a detected number of persons. The determiner compares the estimated number of persons with the detected number of persons to determine, based on a result of comparison, whether a current condition in the space is an abnormal condition where abnormality has occurred in the space. When the result of comparison indicates that the estimated number of persons disagrees with the detected number of persons, the determiner determines the current condition in the space to be the abnormal condition.

An integrated system according to another aspect of the present disclosure includes the determination system described above, and the sensor.

A determination method according to still another aspect of the present disclosure includes an acquisition step, an estimation step, a detection step, and a determination step. The acquisition step includes acquiring schedule information representing multiple time slots, in each of which any number of persons are present in, or absent from, a space. The estimation step includes estimating, by reference to the schedule information, how many persons are supposed to be present in the space to obtain an estimated number of persons. The detection step includes detecting, based on a result of detection provided by a sensor installed in the space to detect any human beings, how many persons are present in the space to obtain a detected number of persons. The determination step includes comparing the estimated number of persons with the detected number of persons to determine, based on a result of comparison, whether a current condition in the space is an abnormal condition where abnormality has occurred in the space. When the result of comparison indicates that the estimated number of persons disagrees with the detected number of persons, the determination step includes determining the current condition in the space to be the abnormal condition.

A program according to yet another aspect of the present disclosure is designed to cause a computer system to perform the determination method described above.

### Brief Description of Drawings

[FIG. 1] FIG. 1 is a system diagram of an integrated system including a determination system according to an exemplary embodiment;
[FIG. 2] FIG. 2 is a block diagram illustrating a configuration for the determination system; and
[FIG. 3] FIG. 3 is a flowchart showing the procedure of operation of the determination system.

### Description of Embodiments

Note that the embodiment and its variations to be described below is only an exemplary one of various embodiments of the present disclosure and its variations and should not be construed as limiting. Rather, the exemplary embodiment and its variations may be readily modified in various manners depending on a design choice or any other factor without departing from a true spirit and scope of the present disclosure.

### (Embodiment)

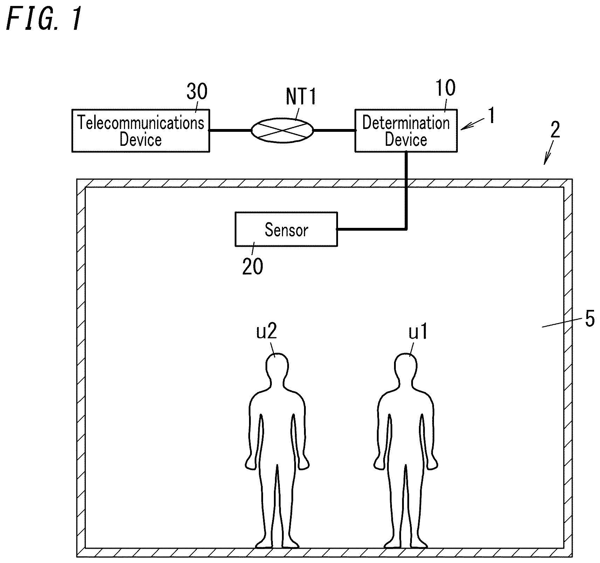

A determination system 1 according to an exemplary embodiment and an integrated system 2 including the determination system 1 will now be described with reference to FIGS. 1-3.

### (1) Overview

An integrated system 2 according to this embodiment includes a determination device 10 serving as the determination system 1 and a sensor 20 as shown in FIG. 1.

The sensor 20 is an image sensor, which may be an infrared array sensor, for example. The sensor 20 is used to detect any person present in a space 5 (refer to FIG. 1) included in a facility. The sensor 20 shoots the space 5 to acquire an infrared image thus shot as a result of detection. The infrared image includes a temperature distribution in a two-dimensional area which is represented by 8 × 8 pixels, for example. The sensor 20 shoots the space 5 a predetermined number of times per second, for example.

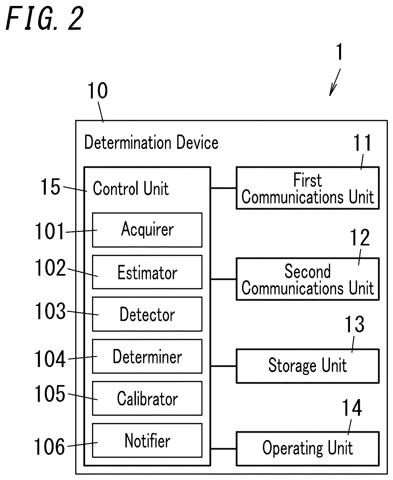

The determination device 10 is configured to be ready to communicate with the sensor 20. As shown in FIG. 2, the determination device 10 includes an acquirer 101, an estimator 102, a detector 103, and a determiner 104. The acquirer 101 acquires schedule information representing multiple time slots, in each of which any number of persons are present in, or absent from, a space 5 (refer to FIG. 1). The estimator 102 estimates, by reference to the schedule information, how many persons are supposed to be present in the space 5 to obtain an estimated number of persons. The detector 103 detects, based on a result of detection provided by the sensor 20 installed in the space 5 to detect any human beings, how many persons (such as persons u1, u2) are present in the space 5 to obtain a detected number of persons. The determiner 104 compares the estimated number of persons with the detected number of persons to determine, based on a result of comparison, whether a current condition in the space 5 is an abnormal condition where abnormality has occurred in the space 5. If the result of comparison indicates that the estimated number of persons disagrees with the detected number of persons, the determiner 104 determines the current condition in the space 5 to be the abnormal condition.

According to this configuration, the estimated number of persons that has been obtained, by reference to the schedule information representing multiple time slots, in each of which any number of persons are present in, or absent from, a space 5, is compared with the detected number of persons that has been obtained by the sensor 20. This allows for determining whether any abnormality has occurred in the number of persons present in the space 5.

The determination device 10 is configured to be ready to communicate with a telecommunications device 30 via a network NT1 such as the Internet. The determination device 10 notifies the telecommunications device 30 of the decision made by the determiner 104. In this embodiment, examples of the telecommunications device 30 include smartphones, tablet computers, and personal computers. The telecommunications device 30 is carried by either a user in the space 5 or an administrator of the space 5 with him or her.

Examples of the "facility" as used herein include non-dwelling facilities such as offices, stores, business establishments, factories, buildings, schools, welfare facilities and hospitals, dwelling facilities such as single-family dwelling houses and multi-family dwelling houses, and dwelling units of a multi-family dwelling house. Examples of the non-dwelling facilities further include theaters, movie theaters, public halls, amusement facilities, complex facilities, restaurants, department stores, hotels, inns, kindergartens, libraries, museums, art museums, underground shopping malls, railway stations, and airports. Furthermore, examples of the "facilities" as used herein further include outdoor facilities such as ballparks, gardens, parking lots, playgrounds, and public parks.

The "space" as used herein is included in the facilities. For example, if the facility is an office, then the space may be an entire floor of the office or a part of the floor of the office. On the other hand, if the facility is a dwelling facility, then the space may be a room included in the dwelling facility such as a living room or a bedroom.

### (2) Configuration

### (2.1) Sensor

As described above, the sensor 20 is an image sensor, which may be an infrared array sensor, for example. The sensor 20 is used to detect a person present in the space 5 included in the facility. The sensor 20 shoots the space 5 to acquire an infrared image thus shot as a result of detection. The infrared image includes a temperature distribution in a two-dimensional plane which is represented by 8 × 8 pixels, for example. That is to say, the infrared image is an image which represents the space 5 to shoot as a two-dimensional plane and which divides the two-dimensional plane into areas made up of 8 × 8 pixels. The infrared image is an image including a temperature distribution on the two-dimensional plane.

The sensor 20 is configured to be ready to communicate with the determination device 10. For example, the sensor 20 is configured to be ready to communicate with the determination device 10 via cables. Alternatively, the sensor 20 may also be configured to be ready to communicate with the determination device 10 wirelessly and/or over the network NT1. The sensor 20 transmits an infrared image as a result of detection to the determination device 10.

### (2.2) Determination device

The determination device 10 includes a first communications unit 11, a second communications unit 12, a storage unit 13, an operating unit 14, and a control unit 15 as shown in FIG. 2.

The determination device 10 may include, for example, a computer system including a processor and a memory. The computer system performs the functions of the control unit 15 by making the processor execute a program stored in the memory. In this embodiment, the program to be executed by the processor is stored in advance in the memory of the computer system. Alternatively, the program may also be distributed after having been stored in a storage medium such as a memory card or downloaded via a telecommunications line such as the Internet.

The first communications unit 11 includes a communications interface for use to communicate with the sensor 20. The first communications unit 11 may communicate with the sensor 20 via wired communication, for example.

The second communications unit 12 includes a communications interface for use to communicate with the telecommunications device 30. That is to say, the second communications unit 12 is configured to be ready to communicate with the telecommunications device 30 via the network NT1.

The storage unit 13 may be implemented as a device selected from the group consisting of, for example, a read-only memory (ROM), a random-access memory (RAM), and an electrically erasable programmable read-only memory (EEPROM).

The storage unit 13 stores schedule information representing multiple time slots, in each of which any number of persons are present in, or absent from, the space 5. The schedule information includes presence/absence information. Each piece of the presence/absence information is associated with a corresponding time slot belonging to the multiple time slots to indicate whether any number of persons are present in, or absent from, the space 5 in the corresponding time slot. If the presence/absence information indicates that any number of persons are present in the space 5, then the schedule information includes the number of persons present in the space 5 associated with the corresponding time slot in which that number of persons are present in the space 5.

The operating unit 14 accepts an operating command entered by the operator of the determination device 10. The operating unit 14 accepts the schedule information in accordance with the operating command entered by the operator of the determination device 10. The operating unit 14 outputs the schedule information thus accepted to the control unit 15. In response, the control unit 15 stores the schedule information in the storage unit 13.

The control unit 15 includes the acquirer 101, the estimator 102, the detector 103, the determiner 104, a resetter 105, and a notifier 106 as shown in FIG. 2.

The acquirer 101 acquires the schedule information representing multiple time slots, in each of which any number of persons are present in, or absent from, a space 5. When the determination device 10 determines whether any abnormality has occurred in the space 5, the acquirer 101 acquires the schedule information from the storage unit 13.

The estimator 102 estimates, by reference to the schedule information, how many persons are supposed to be present in the space 5 to obtain an estimated number of persons. The estimator 102 obtains the estimated number of persons by reference to the presence/absence information in a time slot including the present, i.e., a point in time when the determination device 10 determines whether any abnormality has occurred in the space 5. For example, if the presence/absence information indicates the presence of no persons, then the estimator 102 determines the estimated number of persons to be equal to zero. On the other hand, if the presence/absence information indicates the presence of at least one person, then the estimator 102 determines the number of persons associated with the time slot including the present to be the estimated number of persons.

The detector 103 detects, based on a result of detection (i.e., infrared image) provided by the sensor 20 installed in the space 5 to detect any human beings, how many persons are present in the space 5 to obtain a detected number of persons. That is to say, the detector 103 determines the detected number of persons based on the image captured by the sensor 20 as an image sensor. The detector 103 receives the infrared image as the result of detection from the sensor 20. The detector 103 determines the detected number of persons based on the temperature distribution represented by the infrared image thus received. The detector 103 may determine the detected number of persons based on the temperature distribution represented by a single infrared image. Alternatively, the detector 103 may also determine, using multiple infrared images which are continuous along the time series, the detected number of persons in accordance with a time-dependent variation in the temperature distribution.

The determiner 104 compares the estimated number of persons with the detected number of persons to determine, based on a result of comparison, whether a current condition in the space 5 is an abnormal condition where abnormality has occurred in the space 5. If the result of comparison indicates that the estimated number of persons disagrees with the detected number of persons, the determiner 104 determines the current condition in the space 5 to be the abnormal condition.

More specifically, if the result of detection indicates that the detected number of persons is greater than the estimated number of persons, the determiner 104 determines the current condition in the space 5 to be the abnormal condition (hereinafter referred to as a "first abnormal condition") due to the presence of an outsider in the space 5. On the other hand, if the result of detection indicates that the detected number of persons is less than the estimated number of persons, the determiner 104 determines the current condition in the space 5 to be the abnormal condition (hereinafter referred to as a "second abnormal condition") due to the absence of at least one person who is supposed to be present in the space 5. Furthermore, if the estimated number of persons is equal to or greater than one and the detected number of persons is zero, then the determiner 104 determines the current condition in the space 5 to be the abnormal condition (hereinafter referred to as a "third abnormal condition") due to a malfunction of the sensor 20. Alternatively, if the estimated number of persons is zero and the detected number of persons is equal to or greater than one, then the determiner 104 determines the current condition in the space 5 to be the third abnormal condition. Still alternatively, if the detected number of persons is equal to the estimated number of persons, then the determiner 104 determines the current condition in the space 5 to be a normal condition.

For example, if two persons u1, u2 (refer to FIG. 1) are present in the space 5, the detector 103 determines the detected number of persons to be two. In this case, if the estimator 102 estimates the number of persons present to be one, then the determiner 104 determines the current condition in the space 5 to be the first abnormal condition. On the other hand, if the estimator 102 estimates the number of persons present to be three, then the determiner 104 determines the current condition in the space 5 to be the second abnormal condition. Meanwhile, if the estimator 102 estimates the number of persons present to be two, then the determiner 104 determines the current condition in the space 5 to be the normal condition.

If the determiner 104 has determined the current condition in the space 5 to be the third abnormal condition due to the malfunction of the sensor 20, then the resetter 105 performs reset processing with respect to human detection processing. As used herein, the "human detection processing" may refer to, for example, the processing performed by the sensor 20 to generate an infrared image. The resetter 105 performs, as the reset processing, the processing of starting over the processing performed by the sensor 20 to generate the infrared image.

If the determiner 104 has determined the current condition in the space 5 to be the abnormal condition, then the notifier 106 makes notification that the current condition in the space 5 is the abnormal condition. Specifically, if the determiner 104 has determined the current condition in the space 5 to be the abnormal condition, then the notifier 106 transmits condition information, indicating that the current condition in the space 5 is the abnormal condition, to the telecommunications device 30 via the network NT1. More specifically, if the determiner 104 has determined the current condition in the space 5 to be the first abnormal condition, then the notifier 106 transmits condition information, indicating that the current condition in the space 5 is the abnormal condition due to the presence of an outsider, to the telecommunications device 30 (or notifies the telecommunications device 30 of that condition information). On the other hand, if the determiner 104 has determined the current condition in the space 5 to be the second abnormal condition, then the notifier 106 transmits condition information, indicating that the current condition in the space 5 is the abnormal condition due to the absence of a person who is supposed to be present in the space 5, to the telecommunications device 30 (or notifies the telecommunications device 30 of that condition information). Meanwhile, if the determiner 104 has determined the current condition in the space 5 to be the third abnormal condition, then the notifier 106 transmits information, indicating that the sensor 20 is malfunctioning, as the condition information to the telecommunications device 30 (or notifies the telecommunications device 30 of that condition information).

Furthermore, if the determiner 104 has determined the current condition in the space 5 not to be the abnormal condition, then the notifier 106 makes notification that the current condition in the space 5 is a normal condition. That is to say, if the determiner 104 has determined the current condition in the space 5 to be none of the first, second, or third abnormal condition, then the notifier 106 makes notification that the current condition in the space 5 is a normal condition. If the determiner 104 has determined the current condition in the space 5 to be the normal condition, then the notifier 106 transmits condition information, indicating that the current condition in the space 5 is the normal condition, to the telecommunications device 30 via the network NT1.

### (2.3) Telecommunications device

The telecommunications device 30 is configured to be ready to communicate with the determination device 10 via the network NT1.

The telecommunications device 30 includes, for example, a computer system including a processor and a memory. The computer system performs the functions of the telecommunications device 30 by making the processor execute a program stored in the memory. In this embodiment, the program to be executed by the processor is stored in advance in the memory of the computer system. Alternatively, the program may also be distributed after having been stored in a storage medium such as a memory card or downloaded via a telecommunications line such as the Internet.

On receiving the condition information from the determination device 10, the telecommunications device 30 displays the condition information on a monitor included in the telecommunications device 30. Alternatively, if the condition information indicates any one of the first, second, and third abnormal conditions, the telecommunications device 30 may notify the user of the telecommunications device 30 of the abnormality by emitting a sound from a loudspeaker provided for the telecommunications device 30.

### (3) Operation

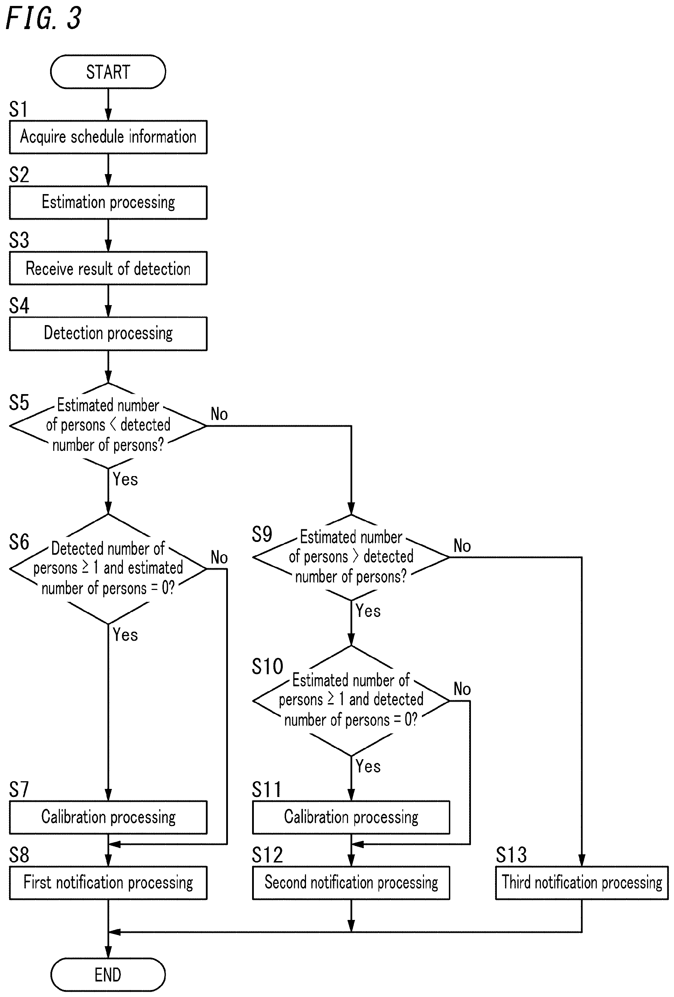

In this section, it will be described with reference to FIG. 3 how the determination device 10 operates. The determination device 10 performs the following operation on a regular basis, thereby determining the current condition in the space 5.

The acquirer 101 acquires schedule information representing multiple time slots, in each of which any number of persons are present in, or absent from, the space 5 (in Step S1).

The estimator 102 performs estimation processing (in Step S2). Specifically, the estimator 102 estimates, by reference to the schedule information acquired in Step S1, how many persons are supposed to be present in the space 5 to obtain an estimated number of persons. More specifically, the estimator 102 determines the estimated number of persons by reference to presence/absence information about a time slot including the present, i.e., a point in time at which the determination device 10 determines whether any abnormality has occurred in the space 5.

The detector 103 receives, as a result of detection, an infrared image from the sensor 20 (in Step S3).

The detector 103 performs detection processing (in Step S4). The detector 103 detects, based on a result of detection (i.e., the infrared image) provided by the sensor 20 installed in the space 5 to detect any human beings, how many persons are present in the space 5 to obtain a detected number of persons. Specifically, the detector 103 determines the detected number of persons based on a temperature distribution represented by the infrared image that the detector 103 has received.

The determiner 104 compares the estimated number of persons with the detected number of persons to determine whether the detected number of persons is greater than the estimated number of persons (in Step S5). That is to say, the determiner 104 determines whether the current condition in the space 5 is the first abnormal condition.

If the determiner 104 has determined the detected number of persons to be greater than the estimated number of persons (if the answer is Yes in Step S5), then the determiner 104 determines whether the detected number of persons is equal to or greater than one and the estimated number of persons is zero (in Step S6). That is to say, if the determiner 104 has determined the current condition in the space 5 to be the first abnormal condition, then the detector 103 further determines whether the current condition in the space 5 is the third abnormal condition.

If the determiner 104 has determined the detected number of persons to be equal to or greater than one and the estimated number of persons to be equal to zero (if the answer is Yes in Step S6), then the resetter 105 performs the reset processing (in Step S7). That is to say, if the determiner 104 has determined the current condition in the space 5 to be the third abnormal condition, then the resetter 105 performs the reset processing. Specifically, the resetter 105 performs the processing of starting over the processing performed by the sensor 20 to generate the infrared image.

Either after Step S7 has been performed or if in Step S6, the determiner 104 determines the detected number of persons not to be equal to or greater than one or the estimated number of persons not to be equal to zero (if the answer is No in Step S6), then the notifier 106 performs first notification processing (in Step S8). When performing the first notification processing after Step S7 has been performed, the notifier 106 generates either condition information indicating that the current condition in the space 5 is abnormal condition due to the presence of an outsider in the space 5 or condition information indicating that the current condition in the space 5 is abnormal condition due to a malfunction of the sensor 20. The notifier 106 transmits the condition information thus generated to the telecommunications device 30 (or notifies the telecommunications device 30 of the condition information thus generated). When performing the first notification processing after the answer has turned out to be No in Step S6, the notifier 106 generates condition information indicating that the current condition in the space 5 is abnormal condition due to the presence of an outsider in the space 5 and transmits the condition information to the telecommunications device 30 (or notifies the telecommunications device 30 of that condition information). In this case, the determiner 104 answers No if in Step S6, the detected number of persons turns out to be greater than the estimated number of persons and both the detected number of persons and the estimated number of persons turn out to be equal to or greater than one. This is because in Step S6, the detected number of persons is supposed to be greater than the estimated number of persons, and therefore, the detected number of persons cannot be less than one (i.e., cannot be equal to zero).

If the determiner 104 has determined the detected number of persons not to be greater than the estimated number of persons (if the answer is No in Step S5), then the determiner 104 compares the estimated number of persons with the detected number of persons, thereby determining whether the detected number of persons is less than the estimated number of persons (in Step S9). That is to say, the determiner 104 determines whether the current condition in the space 5 is the second abnormal condition.

If the determiner 104 has determined the detected number of persons to be less than the estimated number of persons (if the answer is Yes in Step S9), then the determiner 104 determines whether the estimated number of persons is equal to or greater than one and the detected number of persons is zero (in Step S10). That is to say, if the determiner 104 has determined the current condition in the space 5 to be the second abnormal condition, then the detector 103 further determines whether the current condition in the space 5 is the third abnormal condition.

If the determiner 104 has determined the estimated number of persons to be equal to or greater than one and the detected number of persons to be equal to zero (if the answer is Yes in Step S10), then the resetter 105 performs the reset processing (in Step S11). That is to say, if the determiner 104 has determined the current condition in the space 5 to be the third abnormal condition, then the resetter 105 performs the reset processing. Specifically, the resetter 105 performs the processing of starting over the processing performed by the sensor 20 to generate the infrared image.

Either after Step S11 has been performed or if in Step S10, the determiner 104 has determined the estimated number of persons not to be equal to or greater than one or the detected number of persons not to be equal to zero (if the answer is No in Step S10), then the notifier 106 performs second notification processing (in Step S12). When performing the second notification processing after Step S11 has been performed, the notifier 106 generates either condition information indicating that the current condition in the space 5 is abnormal condition due to the absence of a person who is supposed to be present in the space 5 or condition information indicating that the current condition in the space 5 is abnormal condition due to a malfunction of the sensor 20. The notifier 106 transmits the condition information thus generated to the telecommunications device 30 (or notifies the telecommunications device 30 of the condition information thus generated). When performing the second notification processing after the answer has turned out to be No in Step S10, the notifier 106 generates condition information indicating that the current condition in the space 5 is abnormal condition due to the absence of the person who is supposed to be present in the space 5 and transmits the condition information thus generated to the telecommunications device 30 (or notifies the telecommunications device 30 of that condition information). In this case, the determiner 104 answers No if in Step S10, the detected number of persons turns out to be less than the estimated number of persons and both the detected number of persons and the estimated number of persons turn out to be equal to or greater than one. This is because in Step S10, the detected number of persons is supposed to be less than the estimated number of persons, and therefore, the estimated number of persons cannot be less than one (i.e., cannot be equal to zero).

If the determiner 104 has determined the detected number of persons not to be less than the estimated number of persons (if the answer is No in Step S9), then the notifier 106 performs third notification processing (in Step S13). That is to say, if the detected number of persons is equal to the estimated number of persons, then the notifier 106 performs the third notification processing. In that case, the notifier 106 transmits condition information, indicating that the current condition in the space 5 is a normal condition, to the telecommunications device 30 (or notifies the telecommunications device 30 of that condition information).

### (4) Advantages

As can be seen from the foregoing description, the determination device 10 serving as a determination system 1 according to this embodiment is configured to be ready to communicate with the sensor 20. The determination device 10 includes an acquirer 101, an estimator 102, a detector 103, and a determiner 104 as shown in FIG. 2. The acquirer 101 acquires schedule information representing multiple time slots, in each of which any number of persons are present in, or absent from, a space 5. The estimator 102 estimates, by reference to the schedule information, how many persons are supposed to be present in the space 5 to obtain an estimated number of persons. The detector 103 detects, based on a result of detection provided by the sensor 20 installed in the space 5 to detect any human beings, how many persons (such as persons u1, u2) are present in the space 5 to obtain a detected number of persons. The determiner 104 compares the estimated number of persons with the detected number of persons to determine, based on a result of comparison, whether a current condition in the space 5 is an abnormal condition where abnormality has occurred in the space 5. When the result of comparison indicates that the estimated number of persons disagrees with the detected number of persons, the determiner 104 determines the current condition in the space 5 to be the abnormal condition.

According to this configuration, the estimated number of persons that has been obtained, by reference to the schedule information representing multiple time slots, in each of which any number of persons are present in, or absent from, the space 5 is compared with the detected number of persons that has been obtained by the sensor 20. This allows for determining whether any abnormality has occurred in the number of persons present in the space 5.

### (5) Variations

Next, variations will be enumerated one after another. Note that the variations to be described below may be adopted as appropriate in combination with the exemplary embodiment described above.

### (5.1) First variation

In the exemplary embodiment described above, the integrated system 2 includes an image sensor as the sensor 20. However, this configuration is only an example and should not be construed as limiting.

Alternatively, the sensor 20 may also be a temperature sensor for measuring a temperature distribution in the space 5. Still alternatively, the sensor 20 may also be a human detection sensor for detecting the presence of any human being in the space 5. Yet alternatively, the sensor 20 may also be a rangefinder sensor for measuring the distance to a target.

### (5.2) Second variation

In the exemplary embodiment described above, a single sensor is provided in the space 5. However, this configuration is only an example and should not be construed as limiting. Alternatively, a plurality of sensors 20 for detecting the presence of any human being may be provided in the space 5. In that case, the detector 103 determines the detected number of persons based on the results of detection provided by the plurality of sensors 20. For example, if the results of detection are infrared images, then the detector 103 determines the detected number of persons based on the respective heat distributions represented by the plurality of infrared images.

### (5.3) Third variation

The destination of the condition information may be changed according to the type of the condition information.

For example, if the condition information indicates that the current condition in the space 5 is the first abnormal condition, then the determination device 10 may notify not only the user in the space 5 or administrator of the space 5 but also the police of that condition information. Alternatively, if the condition information indicates that the current condition in the space 5 is the first abnormal condition, then the determination device 10 may notify only the police of that condition information.

On the other hand, if the condition information indicates that the current condition in the space 5 is the second abnormal condition and the person who is absent from the space 5 (hereinafter referred to as an "absentee") is identifiable, then the determination device 10 may notify either a family member of the absentee's or a boss of the absentee in his or her company.

### (5.4) Fourth variation

In the exemplary embodiment described above, the notifier 106 is configured to notify the telecommunications device 30 of the condition information. However, this configuration is only an example and should not be construed as limiting.

Alternatively, the notifier 106 may also notify an operator of the determination device 10 or any other person by emitting a sound from a loudspeaker provided for the determination device 10. Still alternatively, the notifier 106 may also notify the operator of the determination device 10 or any other person of the condition information by displaying, for example, a message providing the condition information on a monitor included in the determination device 10.

### (5.5) Fifth variation

In the exemplary embodiment described above, the resetter 105 is configured to perform, as calibration processing, the processing of starting over the processing performed by the sensor 20 to generate an infrared image. However, this configuration is only an example and should not be construed as limiting.

When performing the processing of obtaining the detected number of persons, the detector 103 may change the threshold value for use to identify any human being based on the image representing the temperature distribution.

### (Other variations)

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure. Also, the functions of the determination system 1 may be implemented as, for example, a determination method, a computer program, or a non-transitory storage medium on which the program is stored. A determination method for a determination system 1 according to an aspect is performed by one or more processors (of a computer system). The determination method includes an acquisition step, an estimation step, a detection step, and a determination step. The acquisition step includes acquiring schedule information representing multiple time slots, in each of which any number of persons are present in, or absent from, a space 5. The estimation step includes estimating, by reference to the schedule information, how many persons are supposed to be present in the space 5 to obtain an estimated number of persons. The detection step includes detecting, based on a result of detection provided by a sensor 20 installed in the space 5 to detect any human beings, how many persons are present in the space 5 to obtain a detected number of persons. The determination step includes comparing the estimated number of persons with the detected number of persons to determine, based on a result of comparison, whether a current condition in the space 5 is an abnormal condition where abnormality has occurred in the space 5. When the result of comparison indicates that the estimated number of persons disagrees with the detected number of persons, the determination step includes determining the current condition in the space 5 to be the abnormal condition. A program according to another aspect is designed to cause a computer system to serve as the determination system 1 described above or the agent that performs the determination method described above.

The determination system 1 according to the present disclosure or the agent that performs the determination method for the determination system 1 according to the present disclosure includes a computer system. The computer system includes a processor and a memory as principal hardware components thereof. The functions of the determination system 1 according to the present disclosure or the agent that performs the determination method for the determination system 1 according to the present disclosure are performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation.

In the embodiment described above, the plurality of functions of the determination system 1 are integrated together in a single housing. However, this is not an essential configuration for the determination system 1. Alternatively, those constituent elements of the determination system 1 may be distributed in multiple different housings. Still alternatively, at least some functions of the determination system 1 may be implemented as a cloud computing system as well. For example, the detector 103 may be provided for the sensor 20.

### (Recapitulation)

As can be seen from the foregoing description, a determination system (1) according to a first aspect includes an acquirer (101), an estimator (102), a detector (103), and a determiner (104). The acquirer (101) acquires schedule information representing multiple time slots, in each of which any number of persons are present in, or absent from, a space (5). The estimator (102) estimates, by reference to the schedule information, how many persons are supposed to be present in the space (5) to obtain an estimated number of persons. The detector (103) detects, based on a result of detection provided by a sensor (20) installed in the space (5) to detect any human beings, how many persons are present in the space (5) to obtain a detected number of persons. The determiner (104) compares the estimated number of persons with the detected number of persons to determine, based on a result of comparison, whether a current condition in the space (5) is an abnormal condition where abnormality has occurred in the space (5). When the result of comparison indicates that the estimated number of persons disagrees with the detected number of persons, the determiner (104) determines the current condition in the space (5) to be the abnormal condition.

According to this aspect, the estimated number of persons that has been obtained, by reference to the schedule information representing multiple time slots, in each of which any number of persons are present in, or absent from, a space (5), is compared with the detected number of persons that has been obtained by the sensor (20). This allows the determination system (1) to determine whether any abnormality has occurred in the number of persons present in the space (5).

In a determination system (1) according to a second aspect, which may be implemented in conjunction with the first aspect, the schedule information includes presence/absence information, each piece of the presence/absence information being associated with a corresponding time slot belonging to the multiple time slots to indicate whether any number of persons are present in, or absent from, the space (5) in the corresponding time slot. When the presence/absence information indicates that any number of persons are present in the space (5), the number of persons present in the space (5) is associated with the corresponding time slot in which that number of persons are present in the space (5).

This aspect allows the number of persons who are supposed to be present in the space (5) to be managed more accurately.

In a determination system (1) according to a third aspect, which may be implemented in conjunction with the first or second aspect, when the result of detection indicates that the detected number of persons is greater than the estimated number of persons, the determiner (104) determines the current condition in the space (5) to be the abnormal condition due to presence of an outsider in the space (5).

This aspect allows the presence of any outsider to be detected early.

In a determination system (1) according to a fourth aspect, which may be implemented in conjunction with any one of the first to third aspects, when the result of detection indicates that the detected number of persons is less than the estimated number of persons, the determiner (104) determines the current condition in the space (5) to be the abnormal condition due to absence of at least one person who is supposed to be present in the space (5).

This aspect allows the absence of at least one person to be detected early.

In a determination system (1) according to a fifth aspect, which may be implemented in conjunction with any one of the first to fourth aspects, when the estimated number of persons is equal to or greater than one and the detected number of persons is equal to zero or when the estimated number of persons is equal to zero and the detected number of persons is equal to or greater than one, the determiner (104) determines the current condition in the space (5) to be the abnormal condition due to a malfunction of the sensor (20).

This aspect allows a malfunction of the sensor (20) to be detected early.

A determination system (1) according to a sixth aspect, which may be implemented in conjunction with any one of the first to fifth aspects, further includes a resetter (105). When the determiner (104) has determined the current condition in the space (5) to be the abnormal condition due to the malfunction of the sensor (20), the resetter (105) performs reset processing with respect to human detection processing.

This aspect allows the sensor (20) to recover from the malfunctioning condition early.

In a determination system (1) according to a seventh aspect, which may be implemented in conjunction with any one of the first to sixth aspects, the sensor (20) is an image sensor, and the detector (103) determines the detected number of persons based on an image captured by the image sensor.

This aspect allows the detected number of persons to be determined based on an image captured by the image sensor.

In a determination system (1) according to an eighth aspect, which may be implemented in conjunction with any one of the first to seventh aspects, a plurality of the sensors (20), each detecting any human being, are provided in the space (5). The detector (103) determines the detected number of persons based on results of detection provided by the plurality of the sensors (20).

This aspect allows the detected number of persons to be determined more accurately.

A determination system (1) according to a ninth aspect, which may be implemented in conjunction with any one of the first to eighth aspects, further includes a notifier (106). When the determiner (104) has determined the current condition in the space (5) to be the abnormal condition, the notifier (106) makes notification that the current condition in the space (5) is the abnormal condition.

This aspect allows for making notification that the current condition in the space (5) is the abnormal condition.

An integrated system (2) according to a tenth aspect includes the determination system (1) according to any one of the first to ninth aspects, and the sensor (20).

This aspect allows for determining whether any abnormality has occurred in the number of persons present in the space (5).

A determination method according to an eleventh aspect includes an acquisition step, an estimation step, a detection step, and a determination step. The acquisition step includes acquiring schedule information representing multiple time slots, in each of which any number of persons are present in, or absent from, a space (5). The estimation step includes estimating, by reference to the schedule information, how many persons are supposed to be present in the space (5) to obtain an estimated number of persons. The detection step includes detecting, based on a result of detection provided by a sensor (20) installed in the space (5) to detect any human beings, how many persons are present in the space (5) to obtain a detected number of persons. The determination step includes comparing the estimated number of persons with the detected number of persons to determine, based on a result of comparison, whether a current condition in the space (5) is an abnormal condition where abnormality has occurred in the space (5). When the result of comparison indicates that the estimated number of persons disagrees with the detected number of persons, the determination step includes determining the current condition in the space (5) to be the abnormal condition.

This aspect allows for determining whether any abnormality has occurred in the number of persons present in the space (5).

A program according to a twelfth aspect is designed to cause a computer system to perform the determination method according to the eleventh aspect.

This aspect allows for determining whether any abnormality has occurred in the number of persons present in the space (5).

### Reference Signs List

- 1: Determination System
- 2: Integrated System
- 5: Space
- 10: Determination Device
- 20: Sensor
- 101: Acquirer
- 102: Estimator
- 103: Detector
- 104: Determiner
- 105: Resetter
- 106: Notifier
- u1, u2: Person

## Claims

1. A determination system comprising:
an acquirer configured to acquire schedule information representing multiple time slots, in each of which any number of persons are present in, or absent from, a space;
an estimator configured to estimate, by reference to the schedule information, how many persons are supposed to be present in the space to obtain an estimated number of persons;
a detector configured to detect, based on a result of detection provided by a sensor installed in the space to detect any human beings, how many persons are present in the space to obtain a detected number of persons; and
a determiner configured to compare the estimated number of persons with the detected number of persons to determine, based on a result of comparison, whether a current condition in the space is an abnormal condition where abnormality has occurred in the space,
the determiner being configured to, when the result of comparison indicates that the estimated number of persons disagrees with the detected number of persons, determine the current condition in the space to be the abnormal condition.

2. The determination system of claim 1, wherein
the schedule information includes presence/absence information, each piece of the presence/absence information being associated with a corresponding time slot belonging to the multiple time slots to indicate whether any number of persons are present in, or absent from, the space in the corresponding time slot, and
when the presence/absence information indicates that any number of persons are present in the space, the number of persons present in the space is associated with the corresponding time slot in which that number of persons are present in the space.

3. The determination system of claim 1 or 2, wherein
the determiner is configured to, when the result of detection indicates that the detected number of persons is greater than the estimated number of persons, determine the current condition in the space to be the abnormal condition due to presence of an outsider in the space.

4. The determination system of claim 1 or 2, wherein
the determiner is configured to, when the result of detection indicates that the detected number of persons is less than the estimated number of persons, determine the current condition in the space to be the abnormal condition due to absence of at least one person who is supposed to be present in the space.

5. The determination system of claim 1 or 2, wherein
the determiner is configured to, when the estimated number of persons is equal to or greater than one and the detected number of persons is equal to zero or when the estimated number of persons is equal to zero and the detected number of persons is equal to or greater than one, determine the current condition in the space to be the abnormal condition due to a malfunction of the sensor.

6. The determination system of claim 5, further comprising a resetter configured to, when the determiner has determined the current condition in the space to be the abnormal condition due to the malfunction of the sensor, perform reset processing with respect to human detection processing.

7. The determination system of claim 1 or 2, wherein
the sensor is an image sensor, and
the detector is configured to determine the detected number of persons based on an image captured by the image sensor.

8. The determination system of claim 1 or 2, wherein
a plurality of the sensors, each being configured to detect any human being, are provided in the space, and
the detector is configured to determine the detected number of persons based on results of detection provided by the plurality of the sensors.

9. The determination system of claim 1 or 2, further comprising a notifier configured to, when the determiner has determined the current condition in the space to be the abnormal condition, make notification that the current condition in the space is the abnormal condition.

10. An integrated system comprising:
the determination system of claim 1; and
the sensor.

11. A determination method comprising:
an acquisition step including acquiring schedule information representing multiple time slots, in each of which any number of persons are present in, or absent from, a space;
an estimation step including estimating, by reference to the schedule information, how many persons are supposed to be present in the space to obtain an estimated number of persons;
a detection step including detecting, based on a result of detection provided by a sensor installed in the space to detect any human beings, how many persons are present in the space to obtain a detected number of persons; and
a determination step including comparing the estimated number of persons with the detected number of persons to determine, based on a result of comparison, whether a current condition in the space is an abnormal condition where abnormality has occurred in the space,
the determination step including, when the result of comparison indicates that the estimated number of persons disagrees with the detected number of persons, determining the current condition in the space to be the abnormal condition.

12. A program designed to cause a computer system to perform the determination method of claim 11.
